# EUROPEAN PATENT APPLICATION

(11) **EP 4 715 978 A1**
(43) Date of publication of application: **25.03.2026**
(21) Application number: 25200156.5
(22) Date of filing: 04.09.2025
(51) Int. Cl.: H01M 50/176, H01M 50/552, H01M 50/553, H01M 50/562, H01M 50/564, H01M 50/566, H01M 50/593

(54) **POLE, POLE COMPONENT AND BATTERY**

(30) Priority: 06.09.2024 CN 202422195807 U
(71) Applicant: HUIZHOU EVE POWER CO., LTD, Huizhou, Guangdong 516039 (CN); Eve Power Co., Ltd., Jingmen, Hubei 448000 (CN)
(72) Inventor: HE, Wei, Huizhou, Guangdong, 516039 (CN); LIU, Kaizhu, Huizhou, Guangdong, 516039 (CN); SHU, Kuanjin, Huizhou, Guangdong, 516039 (CN); DUAN, Dong, Huizhou, Guangdong, 516039 (CN); LIU, Ziwen, Huizhou, Guangdong, 516039 (CN); ZHENG, Xu, Huizhou, Guangdong, 516039 (CN)
(74) Representative: Berggren Oy

(57) **Abstract**

A pole (11), a pole component (10), and a battery are provided. The pole (11) includes a first pole portion (111) and a second pole portion (112). An outer periphery of the first pole portion (111) is convexly provided with a first flange (1114). An end of the second pole portion (112) is provided with a mating groove (1121), and the first end (1111) is provided in the mating groove (1121) and engages with the second pole portion (112). An outer periphery of the second pole portion (112) is convexly provided with a second flange (1125), the second flange (1125) is provided with a first connecting groove (1126), and the first flange (1114) is at least partially located in the first connecting groove (1126) and engages with the second flange (1125). The pole improves a bonding force between the first pole portion and the second pole portion.

## Description

### TECHNICAL FIELD

The present application relates to the field of battery technologies, and in particular, to a pole, a pole component, and a battery.

### BACKGROUND

In the related art, a pole of a battery is generally formed by connecting copper and aluminum materials together by stamping, so that the pole has better electrical performance. However, using this stamping method to connect the copper and aluminum materials results in a low bonding force at the joint surface between the copper and aluminum materials. This makes it easy for the copper and aluminum materials to separate, which in turn affects the electrical performance of the pole.

### SUMMARY

The embodiments of the present application provide a pole, a pole component, and a battery, which may improve the technical problem that when the pole is connected by different materials, the bonding force between different materials is low, which easily leads to separation and thus affects the electrical performance of the pole.

According to a first aspect, the embodiments of the present application provide a pole, including:
a first pole portion including a first end and a second end distributed in an axial direction of the first pole portion, where an outer periphery of the first pole portion is convexly provided with a first flange, and the first flange is spaced apart from the second end in the axial direction; and
a second pole portion, where an end of the second pole portion in the axial direction is provided with a mating groove, and the first end is located in the mating groove and engages with the second pole portion; where an outer periphery of the second pole portion is convexly provided with a second flange, an end of the second pole portion away from the first pole portion is spaced apart from the second flange in the axial direction, the second flange is provided with a first connecting groove, and the first flange is at least partially located in the first connecting groove and engages with the second flange.

In some embodiments, the second flange includes a connecting portion and an inverted buckle portion enclosing together to form the first connecting groove, the connecting portion protrudes from an outer periphery of the second pole portion, the first flange is located on a side of the connecting portion in a direction from the first end to the second end, and the inverted buckle portion covers an end of the first flange away from an axis of the first pole portion.

In some embodiments, an end of the inverted buckle portion is connected to the connecting portion, and another end of the inverted buckle portion extends to a side of the first flange away from the connecting portion.

In some embodiments, a thickness of the second flange in the axial direction is h1, a height of the second flange in a protruding direction of the second flange is c, and a height of the inverted buckle portion in the protruding direction of the second flange is d, and in a case where c is greater than h1, d satisfy: d ≥ 2/3c; and in a case where c is less than or equal to h1, d satisfies: d ≥ 0.5 mm.

In some embodiments, the first flange includes a first embedded portion located between the inverted buckle portion and the connecting portion, and a thickness of the first embedded portion in the axial direction is b, satisfying b ≥ 0.5 mm.

In some embodiments, a thickness of the second flange in the axial direction is h1, and a thickness of the inverted buckle portion in the axial direction is h2, satisfying h2/h1 ≥ 30%.

In some embodiments, a side of the first flange facing the second flange is provided with a second connecting groove.

The second flange includes a connecting portion and a second embedded portion enclosing together to form the first connecting groove, the connecting portion protrudes from the outer periphery of the second pole portion, the first flange is located on a side of the connecting portion in a direction from the first end to the second end, and the second embedded portion is located in the second connecting groove.

In some embodiments, a thickness of the second flange in the axial direction is h1, and a width of the second connecting groove in a protruding direction of the first flange is e, satisfying h1>e ≥ 0.5 mm.

In some embodiments, the second pole portion includes a first mating layer located on an end away from the first pole portion, and a second mating layer located on the outer periphery of the first pole portion, the first mating layer and the second mating layer enclose to form the mating groove, and a thickness of the first mating layer and a thickness of the second mating layer are both greater than or equal to 0.5 mm.

In some embodiments, a side of the second pole portion away from the first pole portion is recessed to form a sunk slot, and a depth of the sunk slot is greater than or equal to 1.2 mm.

In some embodiments, the outer periphery of the second pole portion is provided with a step groove, and the step groove is located on an end of the second pole portion away from the first pole portion and extends in a circumferential direction of the second pole portion.

In some embodiments, a depth of the step groove is L1, satisfying L1 ≥ 0.4 mm; and a width of the step groove in the axial direction is L2, satisfying: L2≥ 0.5 mm.

In some embodiments, the first pole portion is made of aluminum; and the second pole portion is made of copper.

According to a second aspect, the embodiments of the present application provide a pole component, including:
a pole, where the pole is the pole as described above, the pole includes a first pole portion and a second pole portion, the first pole portion includes a first end and a second end distributed in an axial direction of the first pole portion, an outer periphery of the first pole portion is convexly provided with a first flange, and the first flange is spaced apart from the second end in the axial direction; where an end of the second pole portion in the axial direction is provided with a mating groove, and the first end is located in the mating groove and engages with the second pole portion; and where an outer periphery of the second pole portion is convexly provided with a second flange, an end of the second pole portion away from the first pole portion is spaced apart from the second flange in the axial direction, the second flange is provided with a first connecting groove, and the first flange is at least partially located in the first connecting groove and engages with the second flange;
an insulating member sleeved on an outer periphery of the pole, where the insulating member includes an accommodating groove, and the first flange and the second flange of the pole are located in the accommodating groove; and
a welding ring sleeved on an outer periphery of the insulating member.

According to a fourth aspect, the embodiments of the present application provides a battery, including a housing, an electrode assembly, and the above pole component, where the electrode assembly is mounted in the housing, and the pole component is mounted in the housing and electrically connected to the electrode assembly.

Beneficial effects of the Embodiments of the present application are as follows.

In the embodiments of the present application, an end of the second pole portion in the axial direction is provided with a mating groove, so that the first end of the first pole portion is located in the mating groove and engages with the second pole portion, and the second pole portion can cover the first end of the first pole portion. This increases the bonding surface between the first pole portion and the second pole portion, which is beneficial for improving connection stability between the first pole portion and the second pole portion, and reducing an interface resistance between the first pole portion and the second pole portion.

On this basis, the outer periphery of the first pole portion is convexly provided with a first flange, and the first flange is spaced apart from the second end of the first pole portion in the axial direction. In addition, the outer periphery of the second pole portion is convexly provided with a second flange, an end of the second pole portion away from the first pole portion is spaced apart from the second flange in the axial direction, and the second flange is provided with a first connecting groove, so that the first flange and the second flange can be close to each other, and when the first end of the first pole portion is located in the mating groove and engages with the second pole portion, the first flange is at least partially located in the first connecting groove and engages with the second flange, which is beneficial for improving the bonding force between the first pole portion and the second pole portion, and improving the technical problem that the first pole portion and the second pole portion of the pole are easily separated.

### BRIEF DESCRIPTION OF THE DRAWINGS

In order to provide clearer explanations of the technical solutions in the embodiments of the present application, it is to be noted that the drawings in the following description are merely some of embodiments of the present application, and that other drawings may be obtained by the skilled person in the art without involving creative labor.
FIG. 1 is a schematic view of a structure of a pole according to an embodiment of the present application.
FIG. 2 is a cross-sectional view along direction A-A in FIG. 1.
FIG. 3 is an enlarged view of part A in FIG. 2.
FIG. 4 is a cross-sectional view of another embodiment of a pole according to an embodiment of the present application, where a section plane is parallel to an axial direction of the pole.
FIG. 5 is an enlarged view of part B in FIG. 4.
FIG. 6 is a schematic view of a structure of a pole component according to an embodiment of the present application.
FIG. 7 is a schematic exploded view of a structure of a pole component according to an embodiment of the present application.
FIG. 8 is a cross-sectional view of another embodiment of a pole according to an embodiment of the present application, where a section plane is parallel to an axial direction of the pole.
FIG. 9 is an enlarged view of part C in FIG. 8.

10, pole component; 11, pole; 111, first pole portion; 1111, first end; 1112, groove; 1113, second end; 1114, first flange; 1115, first embedded portion; 1116, second connecting groove; 112, second pole portion; 1121, mating groove; 1122, first mating layer; 1123, sunk slot; 1124, second mating layer; 1125, second flange; 1126, first connecting groove; 1127, connecting portion; 1128, inverted buckle portion; 1129, second embedded portion; 114, step groove; 12, insulating member; 121, accommodating groove; 13, welding ring.

### DETAILED DESCRIPTION

The technical solutions in the embodiments of the present application will be described clearly and completely hereafter with reference to accompanying drawings. Apparently, the described embodiments are only a part of but not all embodiments of the present application. Based on the embodiments of the present application, all other embodiments obtained by those skilled in the art without involving any creative labor are within the scope of the present application. Furthermore, it should be understood that the specific embodiments described herein are only for illustrating and explaining the present application and are not intended to limit the present application. In the present application, unless otherwise specified, directional terms such as up and down generally refer to the direction of the device in its actual operation or working state, specifically the direction of the figure in the accompanying drawings; while inside and outside refer to the outline of a device.

In the related art, a pole of a battery is generally formed by connecting copper and aluminum materials together by stamping, so that the pole has better electrical performance. However, using this stamping method to connect the copper and aluminum materials results in a low bonding force at the joint surface between the copper and aluminum materials. This makes it easy for the copper and aluminum materials to separate, which in turn affects the electrical performance of the pole.

In order to improve the above problems, the embodiments of the present application provide a pole, a pole component, and a battery.

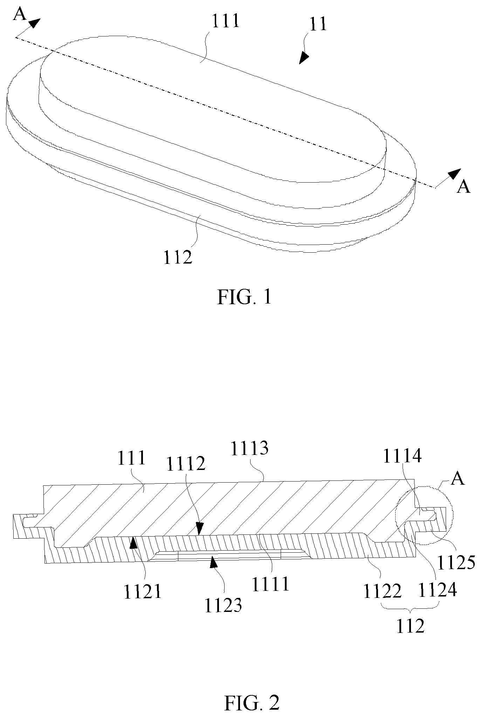

FIG. 1 is a schematic view of a structure of a pole according to an embodiment of the present application. FIG. 2 is a cross-sectional view along line A-A of FIG. 1. As shown in FIG. 1 and FIG. 2, the pole 11 includes a first pole portion 111 and a second pole portion 112, and the first pole portion 111 is connected to the second pole portion 112. The first pole portion 111 includes a first end 1111 and a second end 1113 distributed in the axial direction of the first pole portion 111, an end of the second pole portion 112 in the axial direction is provided with a mating groove 1121, and the first end 1111 of the first pole portion 111 is located in the mating groove 1121 and engages with the second pole portion 112, so that the first pole portion 111 and the second pole portion 112 are connected together.

The pole 11 may be a negative pole or a positive pole. When the pole 11 is used for a battery, the first pole portion 111 of the pole 11 is configured to be connected to the busbar, so that the battery is electrically connected to the busbar. The second pole portion 112 is configured to be connected to a connecting plate (not shown in the figure), and the connecting plate is configured to be connected to a tab of the battery, so as to electrically connect a jelly roll of the battery and the pole 11.

In addition, the material of the first pole portion 111 may be different from the material of the second pole portion 112. The material of the first pole portion 111 may be the same as the material of the busbar, and the material of the second pole portion 112 may be the same as the material of the connecting plate, so as to improve the electrical performance of the pole 11. Specifically, the first pole portion 111 may be made of aluminum, and the second pole portion 112 may be made of copper.

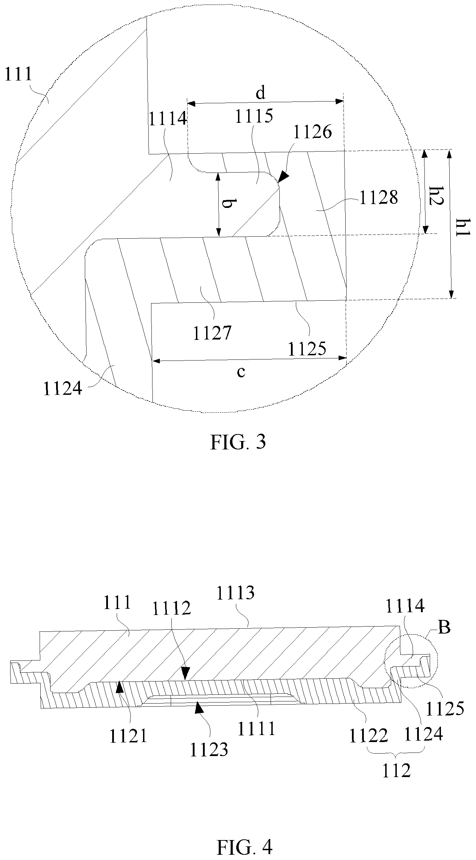

In some embodiments, as shown in FIG. 3, an outer periphery of the first pole portion 111 may be convexly provided with a first flange a first flange 1114, and in the axial direction of the first pole portion 111, the first flange 1114 is spaced apart from the second end 1113. In addition, an outer periphery of the second pole portion 112 is convexly provided with a second flange 1125, an end of the second pole portion 112 away from the first pole portion 111 is spaced apart from the second flange 1125 in the axial direction of the first pole portion 111, and the second flange 1125 is provided with a first connecting groove 1126. When the first end 1111 of the first pole portion 111 is located in the mating groove 1121 and engages with the second pole portion 112, the first flange 1114 is at least partially located in the first connecting groove 1126 and engages with the second flange 1125.

In the pole 11 provided in the embodiments of the present application, an end of the second pole portion 112 in the axial direction of the first pole portion 111 is provided with a mating groove 1121, so that the first end 1111 of the first pole portion 111 is located in the mating groove 1121 and engages with the second pole portion 112, and the second pole portion 112 can cover the first end 1111 of the first pole portion 111. This increases the bonding surface between the first pole portion 111 and the second pole portion 112, which is beneficial for improving connection stability between the first pole portion 111 and the second pole portion 112, and reducing an interface resistance between the first pole portion 111 and the second pole portion 112.

On this basis, the outer periphery of the first pole portion 111 is convexly provided with a first flange 1114, and the first flange 1114 is spaced apart from the second end 1113 of the first pole portion 111 in the axial direction of the first pole portion 111. In addition, the outer periphery of the second pole portion 112 is convexly provided with a second flange 1125, an end of the second pole portion 112 away from the first pole portion 111 is spaced apart from the second flange 1125 in the axial direction of the first pole portion 111, and the second flange 1125 is provided with a first connecting groove 1126, so that the first flange 1114 and the second flange 1125 can be close to each other, and when the first end 1111 of the first pole portion 111 is located in the mating groove 1121 and engages with the second pole portion 112, the first flange 1114 is at least partially located in the first connecting groove 1126 and engages with the second flange 1125, which is beneficial for improving the bonding force between the first pole portion 111 and the second pole portion 112, and reducing the risk of separation between the first pole portion 111 and the second pole portion 112 of the pole 11.

In some embodiments, as shown in FIG. 3, the second flange 1125 of the second pole portion 112 may include a connecting portion 1127 and an inverted buckle portion 1128 that enclose together to form a first connecting groove 1126, where the connecting portion 1127 of the second flange 1125 protrudes from the outer periphery of the second pole portion 112, the first flange 1114 is located on a side of the connecting portion 1127 in a direction from the first end 1111 to the second end 1113 of the first pole portion 111, and the inverted buckle portion 1128 covers an end of the first flange 1114 away from the axis of the first pole portion 111. By covering the end of the first flange 1114 away from the axis of the first pole portion 111 with the inverted buckle portion 1128 of the second flange 1125, it is beneficial for improving the mating strength between the first flange 1114 and the second flange 1125, and further reducing the risk of separation between the first pole portion 111 and the second pole portion 112.

One end of the inverted buckle portion 1128 of the second flange 1125 may be connected to the connecting portion 1127, and the other end of the inverted buckle portion 1128 may extend to a side of the first flange 1114 away from the connecting portion 1127, so as to further improve the covering effect of the inverted buckle portion 1128 on the first flange 1114 and make the connection between the first flange 1114 and the second flange 1125 more stable.

With continued reference to FIG. 3, the thickness of the second flange 1125 in the axial direction of the first pole portion 111 is h1, the height of the second flange 1125 in the protruding direction thereof is c, and the height of the inverted buckle portion 1128 in the protruding direction of the second flange 1125 is d, where when c is greater than h1, d satisfies d ≥ 2/3c, so that the inverted buckle portion 1128 has higher strength, and the mating strength between the first flange 1114 and the second flange 1125 is higher. The ratio of d to c may be 0.7, 0.8, 0.9, etc., which may be determined according to the structure of the first flange 1114 and the second flange 1125.

When c is less than or equal to h1, d satisfies d ≥ 0.5 mm, so that the inverted buckle portion 1128 has higher strength, and the mating strength between the first flange 1114 and the second flange 1125 is higher, and d may be 0.6 mm, 0.7 mm, 0.8 mm, etc., which may be determined according to the structure of the first flange 1114 and the second flange 1125.

In addition, as shown in FIG. 3, the thickness of the inverted buckle portion 1128 in the axial direction of the first pole portion 111 is h2, satisfying h2/h1 ≥ 30%, so that the size of the inverted buckle portion 1128 can be increased as much as possible, making the strength of the inverted buckle portion 1128 higher, and further improving the mating strength between the first flange 1114 and the second flange 1125. The ratio of h2 to h1 may be 40%, 50%, 70%, etc., which may be determined according to the structures of the first flange 1114 and the second flange 1125.

With continued reference to FIG. 3, the first flange 1114 includes a first embedded portion 1115 located between the inverted buckle portion 1128 and the connecting portion 1127, and the thickness of the first embedded portion 1115 in the axial direction of the first pole portion 111 is b, where b satisfies: b ≥ 0.5 mm, so as to improve the strength of the first embedded portion 1115, thereby improving the mating strength between the first flange 1114 and the second flange 1125. The thickness b of the first embedded portion 1115 in the axial direction of the first pole portion 111 may be 0.6 mm, 0.7 mm, 0.8 mm, etc., which may be specifically determined according to the structures of the first flange 1114 and the second flange 1125.

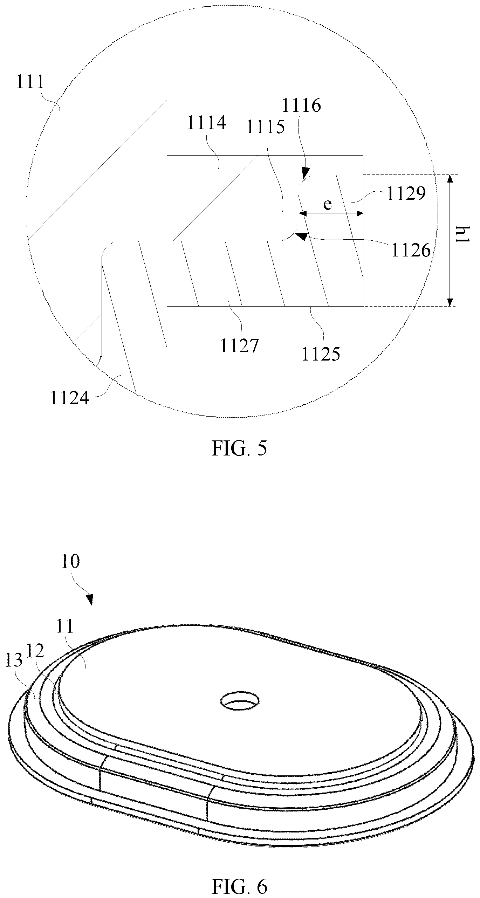

In other embodiments, as shown in FIG. 4 and FIG. 5, the second flange 1125 may include a connecting portion 1127 and a second embedded portion 1129 that enclose to form the first connecting groove 1126, and the connecting portion 1127 protrudes from the outer periphery of the second pole portion 112. The first flange 1114 is located on a side of the connecting portion 1127 in a direction from the first end 1111 to the second end 1113 of the first pole portion 111. When the first end 1111 of the first pole portion 111 is located in the mating groove 1121 and engages with the second pole portion 112, the first flange 1114 is at least partially located in the first connecting groove 1126 enclosed by the connecting portion 1127 and the second embedded portion 1129 of the second flange 1125.

A side of the first flange 1114 facing the second flange 1125 may be provided with a second connecting groove 1116, and the second connecting groove 1116 is located on an end of the first flange 1114 away from the first pole portion 111. In addition, the second embedded portion 1129 of the second flange 1125 may be located in the second connecting groove 1116, thereby further improving the connection strength between the first flange 1114 and the second flange 1125.

In some embodiments, with continued reference to FIG. 5, the thickness of the second flange 1125 in the axial direction of the first pole portion 111 is h1, and the width of the second connecting groove 1116 in the extending direction of the first flange 1114 is e, satisfying h1> e ≥ 0.5 mm, so that the first flange 1114 and the second flange 1125 have high bonding strength, thereby improving the connection stability between the first pole portion 111 and the second pole portion 112.

As shown in FIG. 2, the second pole portion 112 includes a first mating layer 1122 located on an end away from the first pole portion 111, and a second mating layer 1124 located on an outer periphery of the first pole portion 111, and the first mating layer 1122 and the second mating layer 1124 enclose to form a mating groove 1121, where thicknesses of the first mating layer 1122 and the second mating layer 1124 may be both greater than or equal to 0.5 mm, to improve strength and welding performance of the second pole portion 112. Thicknesses of the first mating layer 1122 and the second mating layer 1124 may be the same or different. Thicknesses of the first mating layer 1122 and the second mating layer 1124 may be 0.6 mm, 0.7 mm, or 0.8 mm, which is not limited herein.

In addition, as shown in FIG. 2, a side of the second pole portion 112 away from the first pole portion 111 may be recessed to form a sunk slot 1123, and a depth of the sunk slot 1123 is greater than or equal to 1.2 mm, to reduce a weight of the second pole portion 112. The depth of the sunk slot 1123 may be 1.3 mm, 1.5 mm, 1.6 mm, etc., which may be specifically determined according to the structure of the pole 11.

Specifically, a groove 1112 is recessed on an end surface of the first end 1111 of the first pole portion 111, so as to increase an area of a bonding surface between the first pole portion 111 and the second pole portion 112. The groove 1112 corresponds to the sunk slot 1123 in position, so that the thickness of the first mating layer 1122 of the second pole portion 112 is kept as uniform as possible, and the sunk slot 1123 is conveniently formed on the side of the second mating layer 1124 away from the first pole portion 111.

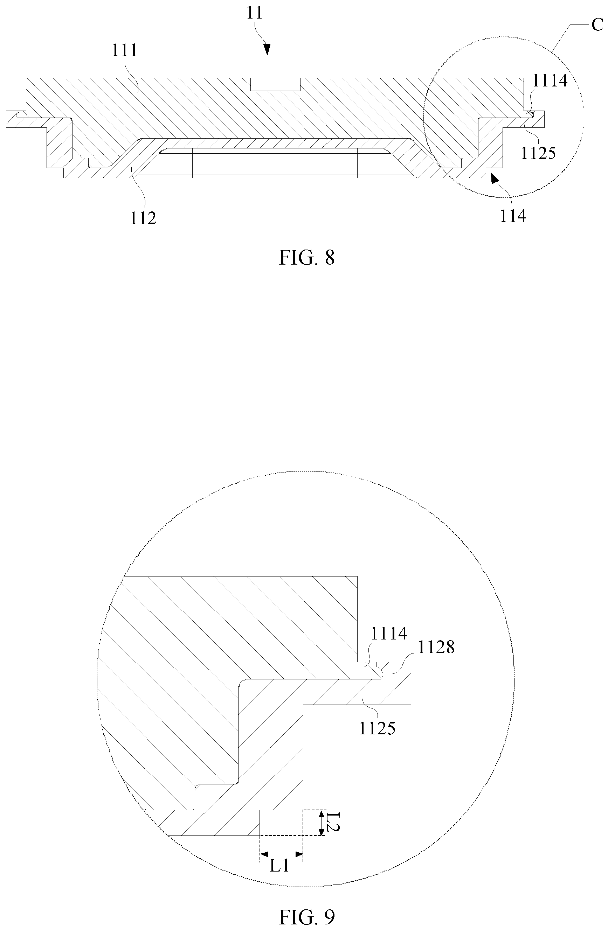

In some embodiments, as shown in FIG. 8 and FIG. 9, the outer periphery of the second pole portion 112 may be provided with a step groove 114, and the step groove 114 is located on an end of the second pole portion 112 away from the first pole portion 111 and extends in a circumferential direction of the second pole portion 112. Therefore, when the pole 11 is welded to the connecting plate, the connecting plate can be embedded into the step groove 114 to quickly position the connecting plate and the second pole portion 112 of the pole 11.

The depth of the step groove 114 is L1, the width of the step groove 114 in the axial direction of the first pole portion 111 is L2, so that the depth L1 of the step groove 114 is greater than or equal to 0.5 mm, and the width L2 of the step groove 114 in the axial direction of the first pole portion 111 is greater than or equal to 0.4 mm, so that the connecting plate can be accurately embedded into the step groove 114. A depth of the step groove 114 may be specifically 0.6 mm, 0.7 mm, or 0.8 mm. A width of the step groove 114 in the axial direction of the first pole portion 111 may be specifically 0.5 mm, 0.6 mm, or 0.7 mm.

Specifically, the connecting plate may be provided with a welding hole, a side of the second pole portion 112 away from the first pole portion 111 is located in the welding hole, and an edge of the welding hole is accommodated in the step groove 114 of the second pole portion 112, so that the connecting plate is embedded in the step groove 114, and the positions of the connecting plate and the pole 11 are relatively stable. Then, the second pole portion 112 of the pole 11 and the connecting plate may be welded together by welding.

In some embodiments, the first pole portion 111 and the second pole portion 112 may be embedded together by cold-heading stamping, so that the first pole portion 111 and the second pole portion 112 have higher bonding strength. Similarly, the first flange 1114 and the second flange 1125 may also be embedded together by cold-heading stamping, so that the first flange 1114 and the second flange 1125 have high bonding strength, and the processing is very convenient.

In addition, the first pole portion 111 and the second pole portion 112 may have a waist-shaped or racetrack-shaped structure, so that the pole 11 has high torsional strength.

The embodiments of the present application further provide a pole component, the pole component includes a pole, the specific structure of the pole refers to the foregoing embodiments, and since the pole component uses all the technical solutions of all the foregoing embodiments, the pole component has at least all the beneficial effects brought by the technical solutions of the foregoing embodiments, which will not be repeated here.

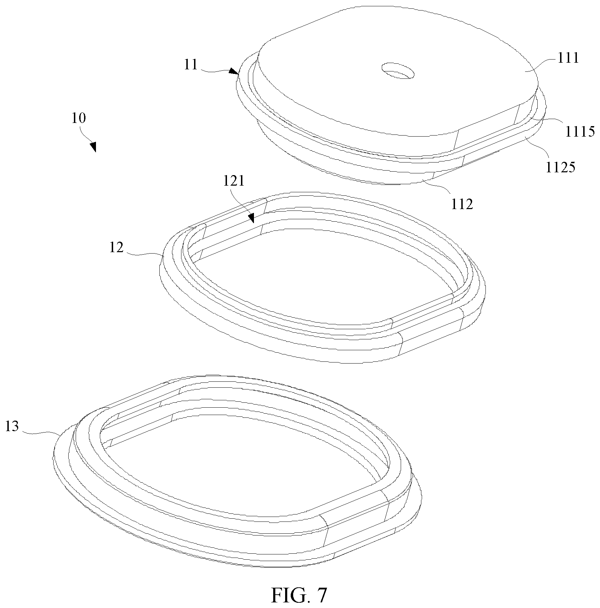

As shown in FIGs. 6 and 7, the pole component 10 may include a pole 11, an insulating member 12 and a welding ring 13, and the structure of the pole 11 may refer to the foregoing embodiments, which will not be repeated here. The insulating member 12 is sleeved on the outer periphery of the pole 11, the insulating member 12 includes an accommodating groove 121, the first flange 1114 and the second flange 1125 are located in the accommodating groove 121, and the welding ring 13 is sleeved on the outer periphery of the insulating member 12. Therefore, the pole component 10 may have a standard terminal structure, which is conducive to improving the assembly efficiency of the pole component 10 and the top cover.

The embodiments of the present application further provide a battery, where the battery includes a pole component, a specific structure of the pole component refers to the foregoing embodiments, and since the battery uses all the technical solutions of all the foregoing embodiments, the battery has at least all beneficial effects brought by the technical solutions of the foregoing embodiments, and details are not described herein again.

The battery may include a housing, an electrode assembly and a pole component 10, the electrode assembly is mounted in the housing, the pole component is mounted in the housing and electrically connected to the electrode assembly, and the pole component may refer to the above embodiments, which will not be repeated here.

In light of the foregoing, although the present application has been described by way of example and in terms of the preferred embodiments, the above preferred embodiments are not intended to limit the present application. Meanwhile, for technical personnel in this field, there may be changes in the specific implementation methods and disclosure scope based on the ideas of this disclosure. In summary, the content of this specification should not be understood as limiting this disclosure.

## Claims

1. A pole (11), **characterized by** comprising:
a first pole portion (111) comprising a first end (1111) and a second end (1113) distributed in an axial direction of the first pole portion (111), wherein an outer periphery of the first pole portion (111) is convexly provided with a first flange (1114), and the first flange (1114) is spaced apart from the second end (1113) in the axial direction; and
a second pole portion (112), wherein an end of the second pole portion (112) in the axial direction is provided with a mating groove (1121), and the first end (1111) is located in the mating groove (1121) and engages with the second pole portion (112); wherein an outer periphery of the second pole portion (112) is convexly provided with a second flange (1125), an end of the second pole portion (112) away from the first pole portion (111) is spaced apart from the second flange (1125) in the axial direction, the second flange (1125) is provided with a first connecting groove (1126), and the first flange (1114) is at least partially located in the first connecting groove (1126) and engages with the second flange (1125).

2. The pole (11) according to claim 1, **characterized in that** the second flange (1125) comprises a connecting portion (1127) and an inverted buckle portion (1128) enclosing together to form the first connecting groove (1126), the connecting portion (1127) protrudes from an outer periphery of the second pole portion (112), the first flange (1114) is located on a side of the connecting portion (1127) in a direction from the first end (1111) to the second end (1113), and the inverted buckle portion (1128) covers an end of the first flange (1114) away from an axis of the first pole portion (111).

3. The pole (11) according to claim 2, **characterized in that** an end of the inverted buckle portion (1128) is connected to the connecting portion (1127), and another end of the inverted buckle portion (1128) extends to a side of the first flange (1114) away from the connecting portion (1127).

4. The pole (11) according to claim 3, **characterized in that** a thickness of the second flange (1125) in the axial direction is h1, a height of the second flange (1125) in a protruding direction of the second flange (1125) is c, and a height of the inverted buckle portion (1128) in the protruding direction of the second flange (1125) is d, wherein in a case where c is greater than h1, d satisfies: d ≥ 2/3c; and wherein in a case where c is less than or equal to h1, d satisfies: d ≥ 0.5 mm.

5. The pole (11) according to claim 3, **characterized in that** the first flange (1114) comprises a first embedded portion (1115) located between the inverted buckle portion (1128) and the connecting portion (1127), and a thickness of the first embedded portion (1115) in the axial direction is b, wherein b satisfies: b ≥ 0.5 mm.

6. The pole (11) according to claim 3, **characterized in that** a thickness of the second flange (1125) in the axial direction is h1, and a thickness of the inverted buckle portion (1128) in the axial direction is h2, wherein h1 and h2 satisfy: h2/h1 ≥ 30%.

7. The pole (11) according to claim 1, **characterized in that** a side of the first flange (1114) facing the second flange (1125) is provided with a second connecting groove (1116);
wherein the second flange (1125) comprises a connecting portion (1127) and a second embedded portion (1129) enclosing together to form the first connecting groove (1126), the connecting portion (1127) protrudes from the outer periphery of the second pole portion (112), the first flange (1114) is located on a side of the connecting portion (1127) in a direction from the first end (1111) to the second end (1113), and the second embedded portion (1129) is located in the second connecting groove (1116).

8. The pole (11) according to claim 7, wherein a thickness of the second flange (1125) in the axial direction is h1, and a width of the second connecting groove (1116) in a protruding direction of the first flange (1114) is e, wherein h1 and e satisfy: h1> e ≥ 0.5 mm.

9. The pole (11) according to any one of claims 1 to 8, **characterized in that** the second pole portion (112) comprises a first mating layer (1122) located on an end away from the first pole portion (111) and a second mating layer (1124) located on the outer periphery of the first pole portion (111), the first mating layer (1122) and the second mating layer (1124) enclose to form the mating groove (1121), and a thickness of the first mating layer (1122) and a thickness of the second mating layer (1124) are both greater than or equal to 0.5 mm.

10. The pole (11) according to any one of claims 1 to 8, **characterized in that** a side of the second pole portion (112) away from the first pole portion (111) is recessed to form a sunk slot (1123), and a depth of the sunk slot (1123) is greater than or equal to 1.2 mm.

11. The pole (11) according to any one of claims 1 to 8, wherein the outer periphery of the second pole portion (112) is provided with a step groove (114), and the step groove (114) is located on an end of the second pole portion (112) away from the first pole portion (111) and extends in a circumferential direction of the second pole portion (112).

12. The pole (11) according to claim 11, **characterized in that** a depth of the step groove (114) is L1, satisfying: L1≥ 0.4 mm; and wherein a width of the step groove (114) in the axial direction is L2, satisfying: L2≥ 0.5 mm.

13. The pole (11) according to any one of claims 1 to 8, **characterized in that** the first pole portion (111) is made of aluminum; and the second pole portion (112) is made of copper.

14. A pole component (10), **characterized by** comprising:
a pole (11), wherein the pole (11) is the pole (11) according to any one of claims 1 to 13;
an insulating member (12) sleeved on an outer periphery of the pole (11), wherein the insulating member (12) comprises an accommodating groove (121), and the first flange (1114) and the second flange (1125) of the pole (11) are located in the accommodating groove (121); and
a welding ring (13) sleeved on an outer periphery of the insulating member (12).

15. A battery, comprising a housing, an electrode assembly, and the pole component (10) according to claim 14, wherein the electrode assembly is mounted in the housing, and the pole component (10) is mounted in the housing and electrically connected to the electrode assembly.
